# EUROPÄISCHE PATENTSCHRIFT

(11) **EP 0 774 611 B1**
(45) Veröffentlichungstag und Bekanntmachung des Hinweises auf die Patenterteilung: **17.05.2000**
(21) Anmeldenummer: 96118009.8
(22) Anmeldetag: 09.11.1996
(51) Int. Cl.: F16L 13/14

(54) **Verfahren zur Herstellung einer Rohrverbindung sowie Kupplungsvorrichtung für die Herstellung einer Rohrverbindung**
Process of manufacture of a pipe joint and coupling device for the manufacture of a pipe joint
Procédé de fabrication d'un raccord de tuyaux et dispositif de raccordement pour la fabrication d'un raccord de tuyaux

(30) Priorität: 18.11.1995 DE 19543092
(43) Veröffentlichungstag der Anmeldung: 21.05.1997
(73) Patentinhaber: NOVOPRESS GMBH PRESSEN UND PRESSWERKZEUGE & CO. KG., 41460 Neuss (DE)
(72) Erfinder:
(74) Vertreter: Paul, Dieter-Alfred, Dipl.-Ing.

(56) Entgegenhaltungen:
- EP-A- 0 159 997
- EP-A- 0 198 789
- EP-A- 0 499 713
- EP-A- 0 582 543
- CH-A- 399 098
- DE-A- 2 418 625
- DE-U- 9 016 310
- US-A- 3 674 292
- US-A- 3 893 718

## Beschreibung

Die Erfindung betrifft ein Verfahren zur Herstellung einer Verbindung von zwei Rohrenenden mittels einer Kupplungsvorrichtung aus einer innenseitigen Traghülse und einer einzigen außenseitigen Preßhülse, bei dem Rohrenden, Traghülse und Preßhülse derart zusammengesetzt werden, daß die Traghülse sich innenseitig in beide Rohrenden hinein erstreckt und die Preßhülse mit einem Preßhülsenabschnitt das eine Rohrende und mit einem weiteren Preßhülsenabschnitt das andere Rohrende außenseitig überdeckt, und bei dem die Preßhülse unter plastischer Verformung und unter Verklemmung der Rohrenden zwischen Preßhülse und Traghülse radial nach innen verpreßt wird. Die Erfindung betrifft ferner eine Kupplungsvorrichtung für die Herstellung einer Verbindung von zwei Rohrenden mit einer innenliegenden Traghülse und einer einzigen, diese umgebenden Preßhülse, zwischen denen Ringräume für die Rohrenden gebildet sind und die eine Mittenbereich und daran beidseitig anschließenden Außenabschnitten aufweist.

Für die Verbindung von Rohrenden ist es bekannt, eine spezielle Kupplungsvorrichtung zu verwenden, in der beide Rohrenden eingeklemmt werden und die den Abstand zwischen den Rohrenden überbrückt. Die Kupplungsvorrichtung hat eine Traghülse mit einem in der Mitte nach außen vorspringenden Anschlagsteg, auf die die Rohrenden von beiden Seiten her bis zu dem Anschlagsteg aufgeschoben werden, so daß sich die Traghülse in beide Rohrenden hinein erstreckt. Außenseitig hat man zunächst mehrere Preßhülsen vorgesehen.

Bei der Kupplungsvorrichtung nach der EP-B-0 159 997 kommen zu beiden Seiten des Anschlagrings jeweils zwei Preßhülsen zum Einsatz, wobei die innenliegenden Preßhülsen durch axiales Überschieben von außenliegenden Preßhülsen plastisch radial nach innen in Richtung auf die Traghülse verformt werden, wodurch die Rohrenden zwischen der Traghülse und den Preßhülsen eingeklemmt werden. Eine ähnliche Kupplungsvorrichtung zeigt Figur 10 der US-A-3 674 292. Sie unterscheidet sich von der nach der EP-B-0 159 997 nur dadurch, daß eine durchgehende innenliegende Preßhülse zum Einsatz kommt.

Um den Aufbau der Kupplungsvorrichtung zu vereinfachen, verwendet man bei der Kupplungsvorrichtung nach dem DE-GM 90 16 310.9 nur noch jeweils eine Preßhülse auf beiden Seiten des Anschlagstegs. Zunächst wird eine dieser Preßhülsen mit Hilfe eines zangenförmigen Preßwerkzeugs derart radial nach innen verpreßt, daß in axialer Richtung beabstandete ringförmige Einschnürungen entstehen, die auf den Innenseiten der Preßhülse entsprechende Vorsprünge zur Folge haben. Die Einschnürungen werden so eingeformt, daß die innenseitigen Vorsprünge auf Lücke zu außenseitigen Ringstegen auf der Traghülse zu liegen kommen, sich also Vorsprünge der Preßhülsen mit Ringstegen der Traghülse abwechseln. Damit diese Anordnung gesichert ist, weist das Preßwerkzeug eine Zentriernut auf, mit der das Preßwerkzeug auf den Anschlagsteg aufgesetzt wird. Im Anschluß an das Verpressen der einen Preßhülse wird nach Umsetzen des Werkzeugs die andere Preßhülse verformt. Die vorbeschriebene Verpressung der Preßhülsen und die Ringstege der Traghülse sorgen dafür, daß die Rohrenden wellenförmig verformt sowie kraft- und formschlüssig eingefaßt werden.

Eine nochmalige Vereinfachung der Kupplungsvorrichtung wird in der EP-A-0 582 543 vorgeschlagen. Die Kupplungsvorrichtung beschränkt sich hier auf zwei Teile, nämlich auf die Traghülse und eine einzige, durchgehende Preßhülse. Die Traghülse hat außenseitig Ringnuten und die Preßhülse innenseitig vorspringende Ringstege, die derart zueinander angeordnet sind, daß die Ringstege der Preßhülse den Ringnuten gegenüberstehen. Beim Preßvorgang wird die gesamte Preßhülse unter plastischer Verformung radial nach innen verpreßt, wobei die Ringnuten auf der Traghülse und die Ringstege an der Preßhülse die Rohrenden wellenförmig verformen. Eine ähnliche Kupplungsvorrichtung ist der US-A-3 893 718 zu entnehmen.

Das bei diesen gattungsgemäßen Kupplungsvorrichtungen angewendete Preßverfahren hat den Nachteil, daß ein sehr großes und damit unhandliches Preßgerät verwendet werden muß, das zudem geeignet sein muß, sehr hohe Preßkräfte aufzuwenden. Ein weiterer Nachteil besteht darin, daß die Herstellung der Verbindung vollständig vor Ort erfolgen muß. Gerade dort wirkt sich aber die Unhandlichkeit des Preßgeräts besonders nachteilig aus, da Rohrleitungen nicht selten an schlecht zugänglichen Orten verlegt werden müssen.

Der Erfindung liegt die Aufgabe zugrunde, das Verfahren zur Herstellung einer Rohrverbindung, bei der eine nur aus Traghülse und einer einzigen Preßhülse bestehende Kupplungsvorrichtung zum Einsatz kommt, so zu gestalten, daß es mit einem wesentlich einfacheren und handlicheren Preßgerät durchgeführt werden kann und auch eine teilweise Vormontage ermöglicht wird. Eine weitere Aufgabe besteht darin, eine hierfür geeignete Kupplungsvorrichtung bereitzustellen.

Der erste Teil dieser Aufgabe wird erfindungsgemäß dadurch gelöst, daß zunächst in einem ersten Preßvorgang der eine Preßhülsenabschnitt ausschließlich in einem solchen Abstand zur Mittelebene der Kupplungsvorrichtung verpreßt wird, daß der andere Preßhülsenabschnitt unverformt und lageunverändert bleibt, und daß danach in einem zweiten Preßvorgang der andere Preßhülsenabschnitt ausschließlich in einem solchen Abstand zur Mittelebene der Kupplungsvorrichtung verpreßt wird, daß der verpreßte Preßhülsenabschnitt nicht weiter verformt wird und lageunverändert bleibt. Vorzugsweise sollen die Preßhülsenabschnitte symmetrisch zur Mittelebene verpreßt werden.

Dieses Verfahren hat den Vorzug, daß ein Preßwerkzeug verwendet werden kann, das weniger als die Hälfte so breit ist wie das gemäß der EP-A-0 582 543 und das die Preßvorgänge in an sich bekannter Weise jeweils ohne Lageveränderung durchführt. Es kann zudem leichter dimensioniert werden, da die den Preßvorgängen aufzubringenden Preßkräfte erheblich geringer sind als bei dem gattungsgemäßen Verfahren. Außerdem eröffnet dieses Verfahren die Möglichkeit, die Kupplungsvorrichtung schon an einem anderen Ort an einem der Rohrenden anzubringen und mit diesem Rohrende zu verpressen. Vor Ort bedarf es dann nur noch eines einzigen Preßvorgangs, um die Kupplungsvorrichtung mit dem anderen Rohrende zu verbinden. Dabei kann das Verfahren auch bei beengten Raumverhältnissen angewendet werden, weil das Preßgerät wesentlich handlicher und kompakter ausgebildet werden kann.

Zwar war es schon durch das DE-GM 90 16 310.9 bekannt, die Rohrenden mit Hilfe von zwei nacheinander durchgeführten Preßvorgängen herzustellen, allerdings bei einer zweigeteilten Preßhülse. Das Verpressen der einen Preßhülse konnte somit die andere Preßhülse nicht beeinflussen, so daß insoweit keine Schwierigkeit auftrat. Der Erfinder der Kupplungsvorrichtung gemäß der EP-A-0 582 543 hat aber offenbar dieses Verfahren als für die Verpressung einer einzigen Preßhülse nicht geeignet angesehen, und zwar offensichtlich in der Sorge, daß zwei nacheinander durchgeführte und jeweils auf einen Preßhülsenabschnitt beschränkte Preßvorgänge zu nicht beeinflußbaren Verformungen oder zumindest Lageveränderungen bei dem jeweils nicht der Verpressung unterliegenden Preßhülsenabschnitt führen, und zwar aufgrund der Tatsache, daß beide Preßhülsenabschnitte miteinander verbunden sind. In der Tat kommt es zu solchen Verformungen und/oder Lageveränderungen, wenn nicht die besonderen Bedingungen des erfindungsgemäßen Verfahrens beachtet werden. Diese bestehen insbesondere darin, daß ein solcher Abstand zur Mittenebene der Kupplungsvorrichtung gehalten wird, daß der Preßvorgang an dem einen Preßhülsenabschnitt keinen nachteiligen Einfluß auf den anderen Preßhülsenabschnitt hat.

Der jeweils einzuhaltende Abstand hängt von einer Reihe von Faktoren ab, beispielsweise dem Durchmesser und dem Verformungswiderstand von Preßhülse und Rohrende. Er kann für jede Ausbildung der Kupplungsvorrichtung mit wenigen Versuchen experimentell bestimmt werden, wobei der Augenschein ausreicht.

Eine für das Verfahren besonders geeignete Kupplungsvorrichtung ist erfindungsgemäß dadurch gekennzeichnet, daß die Preßhülse im Mittenbereich der Kupplungsvorrichtung einen solch geringeren Verformungswiderstand als in den Außenabschnitten hat, daß beim Verpressen ausschließlich des einen Außenabschnitts die Verformungsfortpflanzung auf den anderen Außenabschnitt im wesentlichen unterbrochen ist. Grundgedanke der Erfindung ist es also, im Mittenbereich eine Verformungsentkopplung vorzunehmen, um die Übertragung der Verformung eines Außenabschnitts auf den anderen Außenabschnitt zu unterbinden. Aufgrund dieser Ausbildung kann das erfindungsgemäße Verfahren mit einem entsprechend geringeren Abstand zur Mittelebene der Kupplungsvorrichtung - jedoch unter Auslassung des Mittenbereichs - durchgeführt werden, so daß man größere Freiheiten erhält, was die axiale Erstreckung der Kupplungsvorrichtung und die der Verpressung angeht. Es versteht sich, daß die Mittelebene der Kupplungsvorrichtung auch bei deren asymmetrischer Gestaltung in der Mitte zwischen den Rohrenden liegt, wenn sie mit der Kupplungsvorrichtung durch Verpressen verbunden sind.

Die Verringerung des Verformungswiderstands kann beispielsweise dadurch verwirklicht werden, daß der Mittenbereich zumindest in Teilbereichen eine geringere Wandstärke hat als die Außenabschnitte der Preßhülse. Dabei sollte ein Kompromiß gesucht werden, bei dem die Preßhülse im Mittenbereich nicht so geschwächt wird, daß eine Längskraftübertragung nur noch über die Traghülse erfolgt. Dies kann auf den jeweiligen Anwendungsfall angepaßt werden.

Eine weitere Möglichkeit für die Verwirklichung des Grundgedankens der Erfindung besteht darin, in dem Mittenbereich wenigstens eine Einschnürung vorzusehen. Dies kann mit einer Verringerung der Wandstärke einhergehen, muß es jedoch nicht. Die Einschnürung hat eine Art Scharnierwirkung zur Folge, die einer Übertragung der Verformung an dem einen Preßhülsenabschnitt auf den anderen Preßhülsenabschnitt entgegenwirkt. In entsprechender Weise gilt dies auch für den Fall, daß der Mittenbereich als nach außen vorgewölbter Ringvorsprung mit innenseitiger Ringnut ausgebildet ist.

Sowohl die Einschnürung als auch der Ringvorsprung können dazu genutzt werden, als Anschlag für das Preßgerät zu dienen, wobei das Preßgerät entsprechende angepaßte Nuten oder Vorsprünge haben kann. Auf diese Weise ist eine symmetrische Verpressung der Preßhülsenabschnitte sowie bei entsprechender Auslegung des Preßwerkzeugs die Einhaltung des nach dem erfindungsgemäßen Verfahren vorzusehenden Mindestabstands zur Mittelebene der Kupplungsvorrichtung gesichert. Hierzu kann jedoch auch ein nach außen vorspringender Ringsteg dienen, der nicht zur Schwächung des Mittenbereichs der Kupplungsvorrichtung vorgesehen ist. Solche Schwächungen können dann zu beiden Seiten des Ringstegs vorgenommen werden.

In der Zeichnung ist die Erfindung anhand von mehrere Ausführungsbeispielen näher veranschaulicht. Es zeigen:
- Figur 1: eine erste Kupplungsvorrichtung mit Rohrenden in unverpreßtem Zustand;
- Figur 2: die Kupplungsvorrichtung gemäß Figur 1 in verpreßtem Zustand;
- Figur 3: eine zweite Kupplungsvorrichtung mit Rohrenden in unverpreßtem Zustand;
- Figur 4: die Kupplungsvorrichtung gemäß Figur 3 in verpreßtem Zustand;
- Figur 5: eine dritte Kupplungsvorrichtung mit Rohrenden in unverpreßtem Zustand;
- Figur 6: die Kupplungsvorrichtung gemäß Figur 5 in verpreßtem Zustand;
- Figur 7: eine vierte Kupplungsvorrichtung mit Rohrenden in unverpreßtem Zustand;
- Figur 8: die Kupplungsvorrichtung gemäß Figur 7 in verpreßtem Zustand;
- Figur 9: eine fünfte Kupplungsvorrichtung mit Rohrenden in unverpreßtem Zustand;
- Figur 10: die Kupplungsvorrichtung gemäß Figur 9 in verpreßtem Zustand;
- Figur 11: eine sechste Kupplungsvorrichtung mit Rohrenden in unverpreßtem Zustand;
- Figur 12: die Kupplungsvorrichtung gemäß Figur 11 in verpreßtem Zustand;
- Figur 13: eine siebte Kupplungsvorrichtung mit Rohrenden in unverpreßtem Zustand und
- Figur 14: die Kupplungsvorrichtung gemäß Figur 13 in verpreßtem Zustand.

Alle Darstellungen zeigen Längsschnitte der jeweils oberen Hälften der Kupplungsvorrichtungen und Rohrenden. Die jeweils unteren, nicht gezeigten Hälften sind identisch ausgebildet.

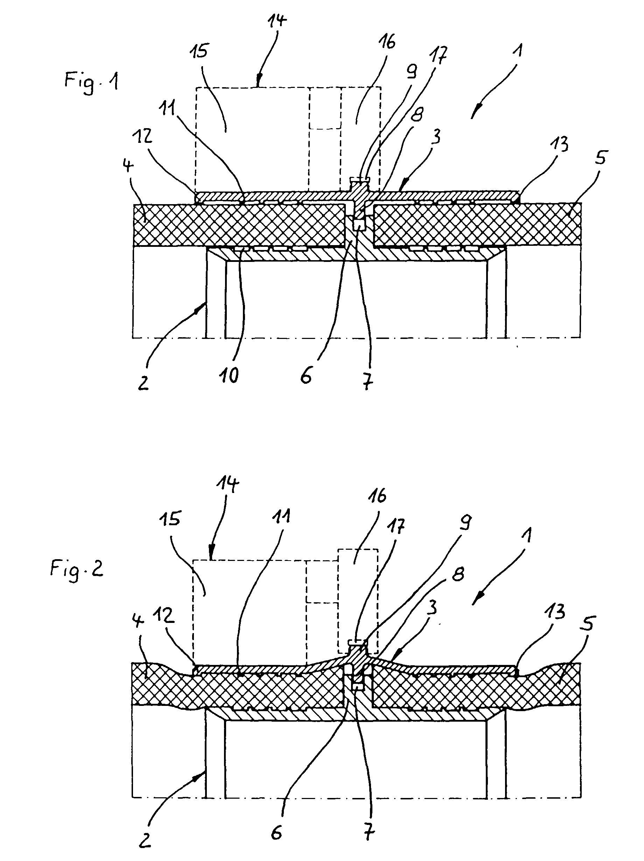

Die in den Figuren 1 und 2 dargestellte Kupplungsvorrichtung 1 besteht aus zwei Teilen, nämlich einer im wesentlichen zylindrischen Traghülse 2 und einer ebenfalls im wesentlichen zylindrischen Preßhülse 3. Zwischen Traghülse 2 und Preßhülse 3 sind Rohrenden 4, 5 eingeschoben, die aus Kunststoff oder Metall bestehen können.

Die Traghülse 2 weist mittig einen Außenringsteg 6 auf, der gleichzeitig als Anschlag für die Rohrenden 4, 5 dient. Der Außenringsteg 6 hat eine Ringnut 7, in die auch schon in unverpreßtem Zustand ein Innenringsteg 8 formschlüssig einfaßt, welcher von der Innenseite der Preßhülse 3 vorsteht. Die Preßhülse 3 weist zudem außenseitig ebenfalls mittig einen Außenringsteg 9 auf.

Auf der Außenseite der Traghülse 2 sind Ringnuten - beispielhaft mit 10 bezeichnet - eingeformt, und zwar mit Abstand zu dem Außenringsteg 6. Den Ringnuten 10 gegenüber stehen jeweils Ringwülste - beispielhaft mit 11 bezeichnet - von der Innenseite der Preßhülse 3 vor. Endseitig weist die Preßhülse 3 ebenfalls jeweils einen Ringwulst 12, 13 auf.

In beiden Figuren ist gestrichelt und schematisch ein Preßgerät 14 eingezeichnet, das mit seinen Preßbacken 15 an dem linksseitigen Abschnitt der Preßhülse 3 anliegt, und zwar mit Abstand zu dem Außenringsteg 9. Für diesen Abstand sorgt ein Führungsarm 16 des Preßgeräts 14, der eine Führungsnut 17 aufweist, welche den Außenringsteg 9 umfaßt. Der Führungsarm 16 ist vertikal beweglich gelagert.

Beim Verpreßvorgang werden die Preßbacken 15 im wesentlichen radial nach innen bewegt, was zu einer entsprechenden Verformung des zunächst betroffenen Abschnitts der Preßhülse 3 führt. Dabei graben sich die Ringwülste 11, 12, 13 in das Material der Rohrenden 4, 5 ein. Gleichzeitig fließt das Material der Rohrenden 4, 5 in die Ringnuten 10 auf der Traghülse 2 ein. Der Abstand der Preßbacken 15 zur Mittelebene der Kupplungsvorrichtung 1 ist so groß, daß die Verformung des betroffenen Abschnitts der Preßhülse 3 nicht zu einer Verformung des anderen, nicht der Verpressung unterliegenden Abschnitts der Preßhülse 3 führt. Nach Durchführung dieses Preßvorgangs kann das Preßgerät 14 umgesetzt werden, und es kann der bisher noch nicht verpreßte Abschnitt der Preßhülse 3 in entsprechender Weise verformt werden. Der Endzustand ist in Figur 2 dargestellt.

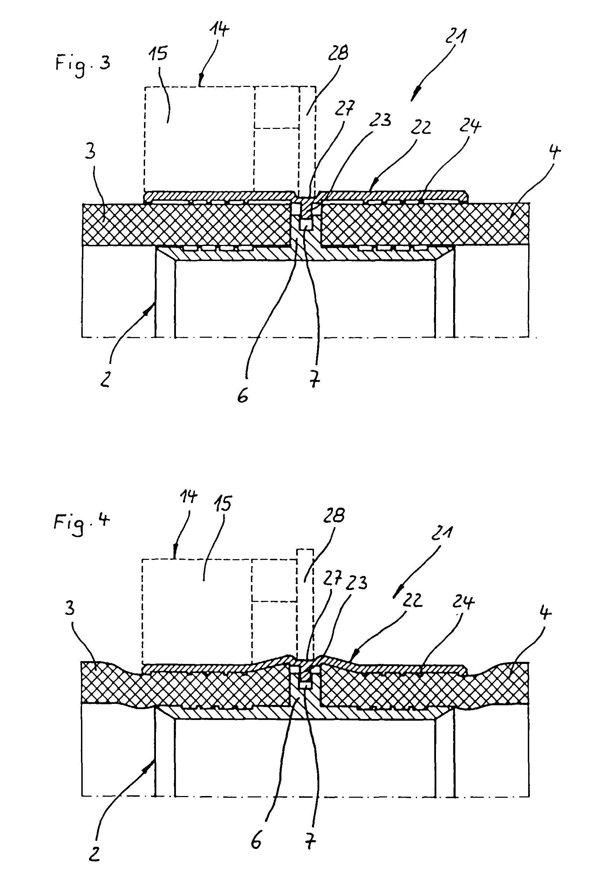

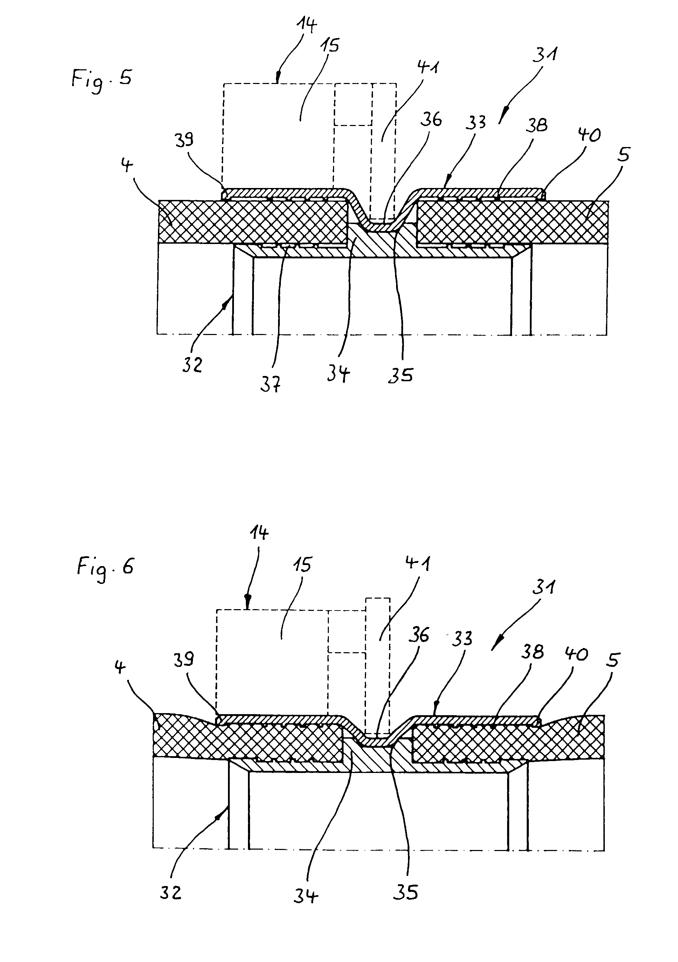

In den Figuren 3 und 4 ist eine zweite Kupplungsvorrichtung 21 dargestellt. Bei ihr findet ebenfalls die Traghülse 2 von der Kupplungsvorrichtung 1 gemäß den Figuren 1 und 2 Verwendung, so daß auf deren dortige Beschreibung Bezug genommen wird.

Die Preßhülse 22 hat hier ebenfalls Zylinderform und mittig einen Innenringsteg 23, der in den Außenring 6 der Traghülse 2 auch schon in unverpreßtem Zustand formschlüssig einfaßt. Die Preßhülse 22 weist innenseitig vorspringende Ringwülste - beispielhaft mit 24 bezeichnet - auf, die gegenüber den Ringnuten 10 der Traghülse 2 liegen, also in gleicher Anordnung wie bei dem Ausführungsbeispiel gemäß den Figuren 1 und 2. Endseitig sind hier gleichfalls weitere Ringwülste 25, 26 vorgesehen.

Die Preßhülse 22 hat im Mittenbereich außenseitig eine Trapeznut 27. Aufgrund dieser Trapeznut 27 ist die Preßhülse 22 in diesem Bereich geschwächt, hat also einen geringeren Verformungswiderstand als in den daran nach außen anschließenden Bereichen.

Es wird hier das gleiche Preßgerät 14 verwendet, wenn auch mit einem an die Trapeznut 27 angepaßten Führungsarm 28. Er faßt in die Trapeznut 27 ein und hat deshalb die gleiche Funktion wie der Führungsarm 16 bei dem Ausführungsbeispiel gemäß den Figuren 1 und 2.

Der Verpreßvorgang entspricht demjenigen, wie er bei dem Ausführungsbeispiel gemäß den Figuren 1 und 2 beschrieben ist. Der durch die Trapeznut 27 reduzierte Verformungswiderstand sorgt dafür, daß die Verformung des einen Abschnitts der Preßhülse 22 nicht zu einer unerwünschten Verformung des anderen Abschnitts führt.

Die in den Figuren 5 und 6 dargestellte Kupplungsvorrichtung 31 ist ebenfalls zweiteilig ausgebildet und hat eine Traghülse 32 und eine diese umgebende Preßhülse 33. Zwischen beiden sind die Rohrenden 4, 5 eingeschoben. Sie stoßen mittig an einem breiten Außenringsteg 34 der Traghülse 32 an, welche außenseitig eine Trapeznut 35 aufweist.

In die Preßhülse 33 ist mittig eine ebenfalls trapezförmige Einschnürung 36 eingepreßt, die in die Trapeznut 35 einfaßt, so daß Traghülse 32 und Preßhülse 33 formschlüssig miteinander verbunden sind. Ansonsten weisen auch hier die Traghülse 32 Ringnuten - beispielhaft mit 37 bezeichnet - und die Preßhülse 33 innenseitig vorspringende Ringwülste - beispielhaft mit 38 bezeichnet - auf, die den Ringnuten 37 gegenüberliegen. Außenseitig hat die Preßhülse 33 weitere Ringwülste 39, 40.

Gestrichelt eingezeichnet ist das Preßgerät 14, das einen an den Querschnitt der Einschnürung 36 angepaßten Führungsarm 41 aufweist. Der Führungsarm 41 faßt in die Einschnürung 36 ein und sorgt dafür, daß die Preßbacken 15 des Preßgeräts 14 den richtigen Abstand zur Mittelebene der Kupplungsvorrichtung 31 haben.

Das Verpressen geschieht in der gleichen Weise wie bei den vorbeschriebenen Ausführungsbeispielen, d. h. zweistufig. Dabei hat die Einschnürung 36 aufgrund einer gewissen Scharnierwirkung zur Folge, daß die Verformung des einen Abschnitts der Preßhülse 33 nicht auf den anderen Abschnitt übertragen wird.

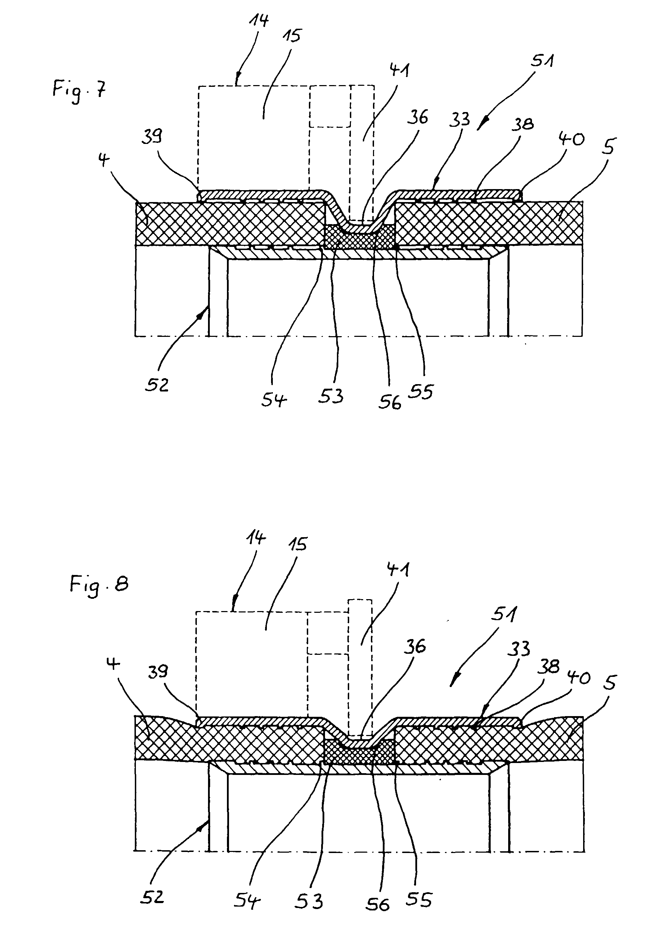

Die in den Figuren 7 und 8 dargestellte Kupplungseinrichtung 51 unterscheidet sich nur in wenigen Punkten von dem Ausführungsbeispiel gemäß den Figuren 5 und 6. Soweit dessen Bezugsziffern übernommen worden sind, wird auf die Beschreibung zu diesem Ausführungsbeispiel Bezug genommen.

Die Kupplungsvorrichtung 51 hat eine Traghülse 52 ohne Außenringsteg. Stattdessen ist ein dem Außenringsteg 34 (Figuren 5 und 6) entsprechender Elastomerring 53 vorgesehen, der zwischen zwei Ringstegen 54, 55 axial unverrückbar gehalten ist. Er dient auch hier als Anschlag für die Rohrenden 4, 5 und weist außenseitig eine Trapeznut 56 auf, in die die Einschnürung 36 der gegenüber dem Ausführungsbeispiel gemäß den Figuren 5 und 6 unverändert gebliebenen Preßhülse 33 einfaßt. Auf diese Weise ist auch hier ein Formschluß zwischen Traghülse 52 und Preßhülse 33 gegeben. Gegenüber dem Ausführungsbeispiel gemäß den Figuren 5 und 6 ist die Herstellung einfacher, da die spanabhebende Bearbeitung zur Herstellung des Außenringstegs 34 entfällt und lediglich die Ringstege 54, 55 zusätzlich ausgeformt werden müssen.

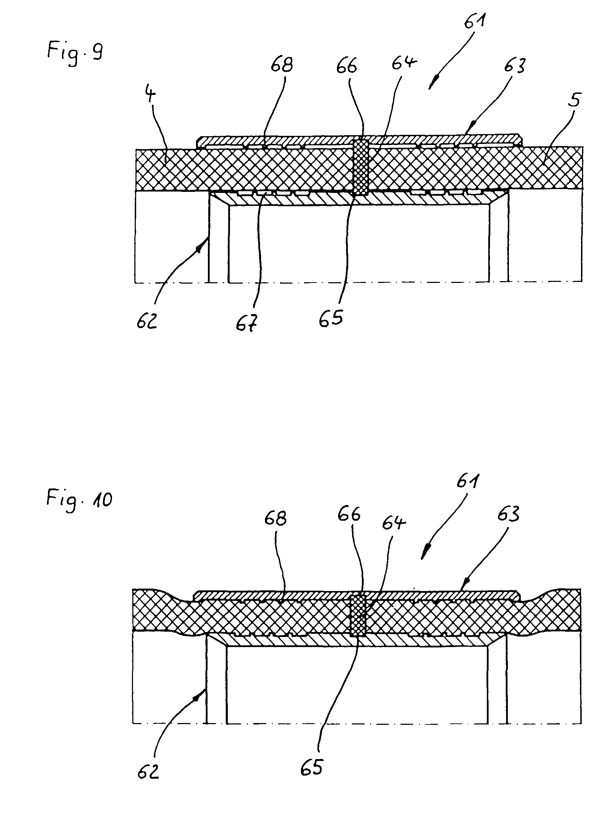

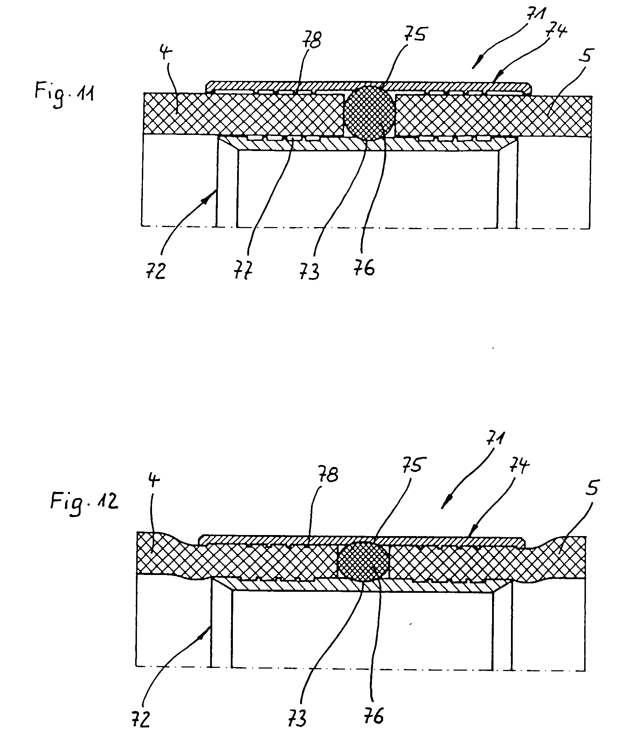

Die in den Figuren 9 und 10 dargestellte Kupplungsvorrichtung 61 hat eine Traghülse 62 und eine Preßhülse 63, zwischen denen die Rohrenden 4, 5 liegen. Als Anschlag für die Rohrenden 4, 5 dient ein im Querschnitt rechteckig hochstehender Elastomerring 64, der in eine Außenringnut 65 in der Traghülse 62 und eine Innenringnut 66 in der Preßhülse 63 einfaßt. Der Elastomerring 64 hat neben der Anschlagfunktion für die Rohrenden 4, 5 die weitere Funktion, Traghülse 62 und Preßhülse 63 formschlüssig miteinander zu verbinden und gegeneinander auszurichten, daß sie symmetrisch zueinander liegen.

Die Innenringnut 66 sorgt für eine Schwächung der Preßhülse 63 in ihrem Mittenbereich. Dies hat zur Folge, daß die Verformung des einen Abschnitts der Preßhülse 63 nicht auf den anderen Abschnitt übertragen wird, selbst wenn in einem relativ kleinen Abstand zu dem Elastomerring 64 verpreßt wird.

Im übrigen weisen auch hier die Traghülse 62 Ringnuten - beispielhaft mit 67 bezeichnet - und die Preßhülse 63 jeweils gegenüberliegende Ringwülste - beispielsweise mit 68 bezeichnet - auf. Beide sorgen für eine Verklammerung der Rohrenden 4, 5 mit der Kupplungsvorrichtung 61.

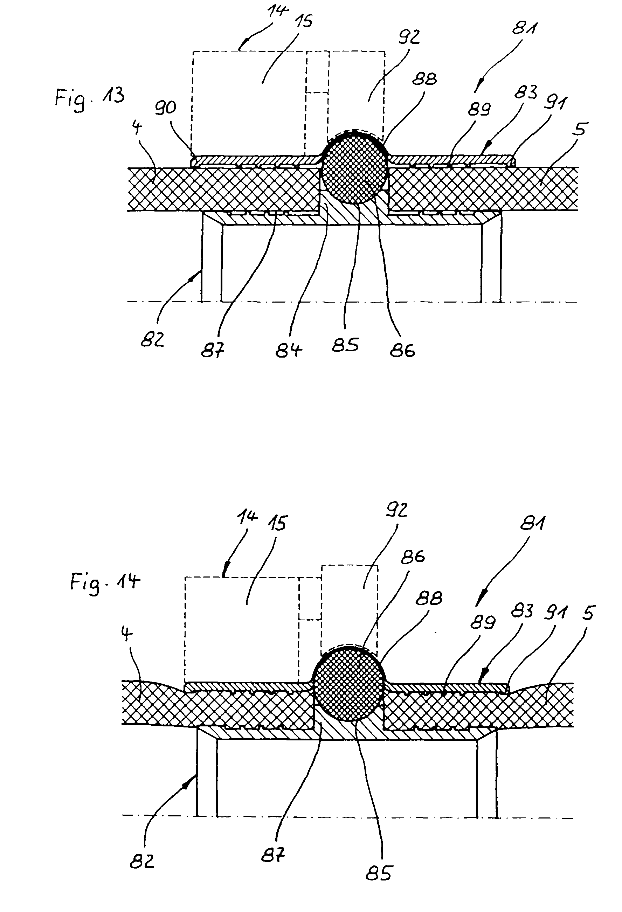

Eine ähnliche Kupplungsvorrichtung 71 ist in den Figuren 11 und 12 dargestellt. Eine Traghülse 72 weist mittig eine flache und kreisringförmige Außenringnut 73 und eine Preßhülse 74 eine ebenso geformte Innenringnut 75 auf. Außenringnut 73 und Innenringnut 75 liegen sich gegenüber, wobei in beide ein Rundschnurring 76 einfaßt. Dieser dient gleichzeitig als Anschlag für die Rohrenden 4, 5.

Die Innenringnut 75 führt hier ebenfalls zu einer Schwächung der Preßhülse 74 im Mittenbereich mit der Folge, daß Verformungen des einen Abschnitts der Preßhülse 74 nicht zu einer unerwünschten Verformung des anderen Abschnitts führt. Gegenüberliegende Ringnuten - beispielhaft mit 77 bezeichnet - in der Traghülse 72 und Ringwülste 78 an der Preßhülse 74 sorgen für eine gute Verklammerung der Rohrenden 4, 5 mit der Kupplungsvorrichtung 71. Im übrigen sorgt auch hier der Rundschnurring 76 für eine formschlüssige Verbindung zwischen Traghülse 72 und Preßhülse 74 mit gegenseitiger axialer und radialer Ausrichtung.

In den Figuren 13 und 14 ist eine Kupplungsvorrichtung 81 dargestellt, die - wie bei den anderen Ausführungsbeispielen-zweiteilig ausgebildet ist, also im wesentlichen aus einer Traghülse 82 und einer Preßhülse 83 besteht. Beide fassen Rohrenden 3, 4 ein.

Die Traghülse 82 weist mittig einen Außenringsteg 84 auf, der gleichzeitig als Anschlag für die Rohrenden 4, 5 dient. Er weist eine kreisförmige Ringnut 85 auf, in die ein Rundschnurring 86 eingesetzt ist. Im übrigen hat die Traghülse 82 im Abstand zu dem Außenringsteg 84 - wie bei allen übrigen Ausführungsbeispielen - Ringnuten - beispielhaft mit 87 bezeichnet -, in die das Material der Rohrenden 4, 5 einfließen kann.

Die ansonsten zylindrische Preßhülse 83 weist im Mittenbereich einen nach außen vorstehenden Ringwulst 88 auf, der durch entsprechende Preßverformung gebildet worden ist. Aufgrund der Verformung hat er einen erheblich dünneren Materialquerschnitt als die anschließenden Abschnitte der Preßhülse 83. Der Querschnitt des Ringwulstes 88 ist so bemessen, daß er zu dem des Rundschnurrings 86 paßt, so daß dieser in den Ringwulst 88 einfaßt. Der Rundschnurring 86 sorgt für eine symmetrische Ausrichtung von Traghülse 82 und Preßhülse 83.

Den Ringnuten 87 gegenüber befinden sich wiederum Ringstege - beispielhaft mit 89 bezeichnet -, die sich beim Verpressen in das Material der Rohrenden 4, 5 eingraben. Dies gilt auch für die endseitigen Ringstege 90, 91.

Gestrichelt gezeichnet ist wieder das Preßgerät 14 mit den Preßbacken 15. Abweichend gestaltet ist hier der Führungsarm 92, weil er an den Ringwulst 88 angepaßt ist. Er hat auch hier die Aufgabe, das Preßgerät 14 mit den Preßbacken 15 in einen bestimmten Abstand zu der Mittelebene der Kupplungsvorrichtung 81 zu halten.

Beim Verpressen hat der Ringwulst 88 aufgrund seiner Formgebung und seines verringerten Querschnitts die Wirkung, daß eine Verpressung des linken Abschnitts der Preßhülse 83 nicht zu einer unerwünschten Verformung des rechten Abschnitts führt. Auf diese Weise wird ein gleichmäßiges und symmetrisches Preßergebnis erzielt, obwohl die Verpressung in zwei Arbeitsgängen nacheinander erfolgt.

## Patentansprüche

1. Verfahren zur Herstellung einer Verbindung von zwei Rohrenden (4, 5) mittels einer Kupplungseinrichtung (1, 21, 31, 51, 61, 71, 81) aus einer innenseitigen Traghülse (2, 32, 52, 62, 72, 82) und einer einzigen außenseitigen Preßhülse (3, 22, 33, 63, 74, 83), bei dem Rohrenden (4, 5), Traghülse (2, 32, 52, 62, 72, 82) und Preßhülse (3, 22, 33, 63, 74, 83) derart zusammengesetzt werden, daß die Traghülse (2, 32, 52, 62, 72, 82) sich innenseitig in beide Rohrenden (4, 5) hinein erstreckt und die Preßhülse (3, 22, 33, 63, 74, 83) mit einem Preßhülsenabschnitt das eine Rohrende (4) und mit einem weiteren Preßhülsenabschnitt das andere Rohrende (5) außenseitig überdeckt, und bei dem die Preßhülse (3, 22, 33, 63, 74, 83) unter plastischer Verformung und unter Verklemmung der Rohrenden (4, 5) zwischen Preßhülse (3, 22, 33, 63, 74, 83) und Traghülse (2, 32, 52, 62, 72, 82) radial nach innen verpreßt wird,
dadurch gekennzeichnet, daß zunächst in einem ersten Preßvorgang der eine Preßhülsenabschnitt ausschließlich in einem solchen Abstand zur Mittelebene der Kupplungseinrichtung (1, 21, 31, 51, 61, 71, 81) verpreßt wird, daß der andere Preßhülsenabschnitt unverformt und lageunverändert bleibt, und daß danach in einem zweiten, vom ersten getrennten Preßvorgang der andere Preßhülsenabschnitt ausschließlich in einem solchen Abstand zur Mittelebene der Kupplungsvorrichtung (1) verpreßt wird, daß der zunächst verpreßte Preßhülsenabschnitt nicht weiter verformt wird und lageunverändert bleibt.

2. Verfahren nach Anspruch 1, **dadurch gekennzeichnet**, daß die Preßhülsenabschnitte symmetrisch zur Mittelebene verpreßt werden.

3. Kupplungsvorrichtung für die Herstellung einer Verbindung von zwei Rohrenden (4, 5) mit einer innenliegenden Traghülse (3, 22, 52, 62, 72, 82) und einer einzigen, diese umgebenden Preßhülse (22, 33, 63, 74, 83), zwischen denen Ringräume für die Rohrenden (4, 5) gebildet sind und die einen Mittenbereich und daran beidseitig anschließende, für die Verpressung bestimmte Außenabschnitte aufweist, **dadurch gekennzeichnet**, daß die Preßhülse (22, 33, 63, 74, 83) im Mittenbereich der Kupplungsvorrichtung (21, 31, 51, 61, 71, 81) einen solch geringeren Verformungswiderstand als in den daran anschließenden Außenabschnitten hat, daß beim Verpressen ausschließlich des einen Außenabschnitts die Verformungsfortpflanzung auf den anderen Außenabschnitt im wesentlichen unterbrochen ist.

4. Kupplungsvorrichtung nach Anspruch 3, **dadurch gekennzeichnet**, daß der Mittenbereich der Preßhülse (22, 61, 71, 83) eine geringere Wandstärke hat als die Außenabschnitte.

5. Kupplungsvorrichtung nach Anspruch 4, **dadurch gekennzeichnet**, daß nur Teile des Mittenbereichs eine geringere Wandstärke haben.

6. Kupplungsvorrichtung nach einem der Ansprüche 3 bis 5, **dadurch gekennzeichnet**, daß der Mittenbereich der Preßhülse (22, 33) wenigstens eine Einschnürung (27, 36) aufweist.

7. Kupplungsvorrichtung nach Anspruch 6, **dadurch gekennzeichnet**, daß die Einschnürung (36) gleiche Wandstärke wie die Außenabschnitte der Preßhülse (33) hat.

8. Kupplungsvorrichtung nach Anspruch 6 oder 7, **dadurch gekennzeichnet**, daä die Einschnürung (27, 36) im Querschnitt U- oder Trapezform hat.

9. Kupplungsvorrichtung nach einem der Ansprüche 3 bis 8, **dadurch gekennzeichnet**, daß der Mittenbereich der Preßhülse (3, 83) als nach außen vorgewölbter Ringvorsprung (9, 88) ausgebildet ist.

10. Kupplungsvorrichtung nach Anspruch 9, **dadurch gekennzeichnet**, daß der Ringvorsprung als Ringwulst (88) mit innenseitiger Ringnut ausgebildet ist.

11. Kupplungsvorrichtung nach Anspruch 9, **dadurch gekennzeichnet**, daß der Ringvorsprung als Ringsteg (9) ausgebildet ist.

## Claims

1. A method of producing a joint between two pipe ends (4, 5) by means of a coupling device (1, 21, 31, 51, 61, 71, 81) comprising an internal supporting sleeve (2, 32, 52, 62, 72, 82) and a single external pressing sleeve (3, 22, 33, 63, 74, 83), wherein the pipe ends (4, 5), supporting sleeve (2, 32, 52, 62, 72, 82) and pressing sleeve (3, 22, 33, 63, 74, 83) are put together so that the supporting sleeve (2, 32, 52, 62, 72, 82) extends internally into both pipe ends (4, 5) and the pressing sleeve (3, 22, 33, 63, 74, 83) externally overlaps one pipe end (4) with one pressing sleeve section and externally overlaps the other pipe end (5) with a further pressing sleeve section, and wherein the pressing sleeve (3, 22, 33, 63, 74, 83) is pressed radially inwards with plastic deformation and with clamping of the pipe ends (4, 5) between the pressing sleeve (3, 22, 33, 63, 74, 83) and the supporting sleeve (2, 32, 52, 62, 72, 82),
**characterised in that** first of all, in a first pressing operation, one pressing sleeve section is pressed exclusively at a distance from the mid-plane of the coupling device (1, 21, 31, 51, 61, 71, 81) such that the other pressing sleeve section remains undeformed and unchanged in position, and that thereafter, in a second pressing operation separate from the first pressing operation, the other pressing sleeve section is pressed exclusively at a distance from the mid-plane of the coupling device (1) such that the pressing sleeve section which was pressed first is not deformed further and remains unchanged in position.

2. A method according to claim 1, **characterised in that** the pressing sleeve sections are pressed symmetrically in relation to the mid-plane.

3. A coupling device for producing a joint between two pipe ends (4, 5), which comprises an internal supporting sleeve (3, 22, 52, 62, 72, 82) and a single pressing sleeve (22, 33, 63, 74, 83) surrounding the latter, between which sleeves annular spaces are formed for the pipe ends (4, 5), and which comprises a middle region and outer sections which are adjacent thereto on both sides and which are intended for pressing, **characterised in that** in the middle region of the coupling device (21, 31, 51, 61, 71, 81) the pressing sleeve (22, 33, 63, 74, 83) has a lower resistance to deformation than that in the outer sections adjacent thereto, such that when exclusively one external section is pressed the propagation of deformation on to the other external section is substantially interrupted.

4. A coupling device according to claim 3, **characterised in that** the middle region of the pressing sleeve (22, 61, 71, 83) has a lesser wall thickness than that of the outer sections.

5. A coupling device according to claim 4, **characterised in that** only parts of the middle region have a lesser wall thickness.

6. A coupling device according to any one of claims 3 to 5, **characterised in that** the middle region of the pressing sleeve (22, 33) comprises at least one constriction (27, 36).

7. A coupling device according to claim 6, **characterised in that** the constriction has (36) the same wall thickness as the outer sections of the pressing sleeve (33).

8. A coupling device according to claims 6 or 7, **characterised in that** the constriction (27, 36) is U-shaped or trapezoidal in cross-section.

9. A coupling device according to any one of claims 3 to 8, **characterised in that** the middle region of the pressing sleeve (3, 83) is formed as an outwardly pre-arched annular projection (9, 88).

10. A coupling device according to claim 9, **characterised in that** the annular projection is formed as an annular bead (88) with an internal annular groove.

11. A coupling device according to claim 9, **characterised in that** the annular projection is formed as an annular rib (9).

## Revendications

1. Procédé pour établir une liaison de deux extrémités tubulaires (4, 5) au moyen d'un dispositif de raccordement (1, 21, 31, 51, 61, 71, 81) comprenant une douille intérieure de support (2, 32, 52, 62, 72, 82) et une unique douille extérieure de compression (3, 22, 33, 63, 74, 83), dans lequel les extrémités tubulaires (4, 5), la douille de support (2, 32, 52, 62, 72, 82) et la douille de compression (3, 22, 33, 63, 74, 83) sont assemblées de façon telle que la douille de support (2, 32, 52, 62, 72, 82) s'étende intérieurement dans les deux extrémités tubulaires (4, 5), et que la douille de compression (3, 22, 33, 63, 74, 83) recouvre extérieurement l'une (4) des extrémités tubulaires par un segment, et l'autre extrémité tubulaire (5) par un autre segment ; et dans lequel la douille de compression (3, 22, 33, 63, 74, 83) est comprimée radialement vers l'intérieur avec déformation plastique, et avec coincement des extrémités tubulaires (4, 5) entre la douille de compression (3, 22, 33, 63, 74, 83) et la douille de support (2, 32, 52, 62, 72, 82),
caractérisé par le fait que l'un des segments de la douille de compression est tout d'abord comprimé lors d'un premier processus de compression, en présentant, vis-à-vis du plan médian du dispositif de raccordement (1, 21, 31, 51, 61, 71, 81), exclusivement une distance telle que l'autre segment de la douille de compression demeure non déformé et conserve une position inchangée ; et par le fait que l'autre segment de la douille de compression est ensuite comprimé lors d'un second processus de compression distinct du premier processus, en présentant, vis-à-vis du plan médian du dispositif de raccordement (1), exclusivement une distance telle que le segment de douille de compression initialement comprimé ne soit pas déformé davantage, et conserve une position inchangée.

2. Procédé selon la revendication 1, caractérisé par le fait que les segments de la douille de compression sont comprimés symétriquement par rapport au plan médian.

3. Dispositif de raccordement pour établir une liaison de deux extrémités tubulaires (4, 5), comprenant une douille intérieure de support (3, 22, 52, 62, 72, 82) et une unique douille de compression (22, 33, 63, 74, 83) qui entoure cette dernière, douilles entre lesquelles sont formés des espaces annulaires affectés aux extrémités tubulaires (4, 5), et comportant une région centrale et des segments extérieurs contigus à cette dernière de part et d'autre, et destinés à la compression, caractérisé par le fait que la douille de compression (22, 33, 63, 74, 83) oppose, dans la région centrale du dispositif de raccordement (21, 31, 51, 61, 71, 81), une résistance à la déformation moindre que dans les segments extérieurs contigus à ladite région, de telle sorte que, lors de la compression exclusive de l'un des segments extérieurs, la propagation de la déformation vers l'autre segment extérieur soit pour l'essentiel interrompue.

4. Dispositif de raccordement selon la revendication 3, caractérisé par le fait que la région centrale de la douille de compression (22, 61, 71, 83) présente une plus faible épaisseur de paroi que les segments extérieurs.

5. Dispositif de raccordement selon la revendication 4, caractérisé par le fait que seules des parties de la région centrale présentent une plus faible épaisseur de paroi.

6. Dispositif de raccordement selon l'une des revendications 3 à 5, caractérisé par le fait que la région centrale de la douille de compression (22, 33) comporte au moins un resserrement (27, 36).

7. Dispositif de raccordement selon la revendication 6, caractérisé par le fait que le resserrement (36) possède la même épaisseur de paroi que les segments extérieurs de la douille de compression (33).

8. Dispositif de raccordement selon la revendication 6 ou 7, caractérisé par le fait que le resserrement (27, 36) revêt la forme d'un U ou d'un trapèze en coupe transversale.

9. Dispositif de raccordement selon l'une des revendications 3 à 8, caractérisé par le -fait que la région centrale de la douille de compression (3, 83) est réalisée sous la forme d'une saillie annulaire (9, 88) à bombement préalable vers l'extérieur.

10. Dispositif de raccordement selon la'revendication 9, caractérisé par le fait que la saillie annulaire est réalisée sous la forme d'un bourrelet annulaire (88) à rainure annulaire intérieure.

11. Dispositif de raccordement selon la revendication 9, caractérisé par le fait que la saillie annulaire est réalisée sous la forme d'une membrure annulaire (9).
